# EUROPÄISCHE PATENTANMELDUNG

(11) **EP 2 192 335 A1**
(43) Veröffentlichungstag der Anmeldung: **02.06.2010**
(21) Anmeldenummer: 09000710.5
(22) Anmeldetag: 20.01.2009
(51) Int. Cl.: F16K 31/06

(54) **Ventil mit massivem , magnetisierbarem Kunststoffkörper**

(30) Priorität: 07.11.2008 DE 102008056431
(71) Anmelder: Carl Freudenberg KG, 69469 Weinheim (DE)
(72) Erfinder: Als, Andreas, 6300 Wörgl (AT); Schachermayr, Wolfgang, 6020 Insbrug (AT); Kriechbaum, Ralf, Dr., 6330 Kufstein (AT); Gund, Christoph, Dr., 69221 Dossenheim (DE); Heinrich, Ralf, Dr., 67365 Schwegenheim (DE); Gerlich, Torsten, Dr., 64625 Bensheim (DE); Schmied, Benno, 67071 Ludwigshafen (DE)

(57) **Zusammenfassung**

Ein Ventil mit einem Einlass (2), einem Auslass (1), einem Dichtkörper (3) und einer Einrichtung (4) zur Erzeugung eines magnetischen Feldes, wobei der Dichtkörper (3) durch die Einrichtung (4) zumindest teilweise beweglich ist, wobei der Dichtkörper (3) den Einlass (2) und den Auslass (1) fluidleitend verbindet, indem er zumindest teilweise von einem Dichtsitz (5) abhebt, und wobei der Dichtkörper (3) aus einem Kunststoffkörper (6) gefertigt ist, der durch das magnetische Feld zumindest bereichsweise bewegbar ist, ist im Hinblick auf die Aufgabe, ein Ventil derart auszugestalten und weiterzubilden, dass dieses nach kostengünstiger Fertigung eine hohe Lebensdauer aufweist und problemlos geräuscharm betrieben werden kann, **dadurch gekennzeichnet, dass** der Dichtkörper (3) als massiver Kunststoffkörper (6) ausgebildet ist.

## Beschreibung

### Technisches Gebiet

Die Erfindung betrifft ein Ventil mit einem Einlass, einem Auslass, einem Dichtkörper und einer Einrichtung zur Erzeugung eines magnetischen Feldes, wobei der Dichtkörper durch die Einrichtung zumindest teilweise beweglich ist, wobei der Dichtkörper den Einlass und den Auslass fluidleitend verbindet, indem er zumindest teilweise von einem Dichtsitz abhebt, und wobei der Dichtkörper aus einem Kunststoffkörper gefertigt ist, der durch das magnetische Feld zumindest bereichsweise bewegbar ist.

### Stand der Technik

Ventile der eingangs genannten Art sind bereits in der noch unveröffentlichten DE 10 2007 041 050.8 offenbart. Dort ist der Kunststoffkörper als Schaumstoffkörper ausgebildet.

Das Hubverhalten der Dichtkörper der gattungsbildenden Ventile hängt von der Kompressibilität und der Scherfestigkeit des verwendeten Schaumstoffes ab. Des Weiteren verändert die Deformierung und das damit einhergehende Ausbauchen der Schaumstoffkörper während des Hubs das Hubverhalten in nichtlinearer und nur schwer vorausberechenbarer Weise.

Bei den gattungsbildenden Ventilen mit einem Schaumstoffkörper ist weiter nachteilig, dass der Schaumstoffkörper punktuell stark belastet wird und dadurch Materialermüdungen auftreten können. Ein Schaumstoff neigt häufig zur Ausbildung von Riss- oder Bruchstellen an den feinen Stegen, welche dessen Poren aufspannen. Die Lebensdauer des Dichtkörpers kann daher in unerwünschtem Maße verkürzt werden.

Schließlich muss ein Schaumstoffkörper aufgrund seiner Porosität in besonderer Weise verarbeitet oder mit einer Dichtung versehen werden, damit eine dichtende Anlage am Dichtsitz des Ventils gegeben ist. Hiermit ist ein erhöhter Fertigungsaufwand verbunden.

### Darstellung der Erfindung

Der Erfindung liegt daher die Aufgabe zu Grunde, ein Ventil der eingangs genannten Art derart auszugestalten und weiterzubilden, dass dieses nach kostengünstiger Fertigung eine hohe Lebensdauer aufweist und problemlos geräuscharm betrieben werden kann.

Erfindungsgemäß wird die voranstehende Aufgabe mit den Merkmalen des Patentanspruchs 1 gelöst.

Danach ist ein Ventil der eingangs genannten Art **dadurch gekennzeichnet, dass** der Dichtkörper als massiver Kunststoffkörper ausgebildet ist.

Erfindungsgemäß ist erkannt worden, dass ein massiver Kunststoffkörper, der nicht als Schaumstoffkörper ausgebildet ist, nahezu keine Poren, Luft- oder Gaseinschlüsse aufweist. Der Kunststoffkörper neigt in geringerem Maße zur Ausbildung von Riss- oder Bruchstellen im Betrieb und weist daher eine hohe Stabilität und Lebensdauer auf. Des Weiteren ist ein massiver Kunststoffkörper mit einer geeigneten Weichheit oder Elastizität nahezu geräuschlos an einem Dichtsitz oder an einem Anschlag anlegbar. Insbesondere bei einem getakteten Ventil können aufgrund der Weichheit des Kunststoffkörpers stakkatoartige Geräusche vermieden werden. Bei Verwendung des hier beschriebenen Ventils in einem Kraftfahrzeug treten in dessen Innenraum keine störenden Geräusche auf, die durch das Anschlagen eines Dichtkörpers am Dichtsitz oder einem Anschlag erzeugt werden. Aufgrund der Verwendung eines Dichtkörpers, der als Kunststoffkörper und nicht als Metallteil ausgebildet ist, können erhebliches Gewicht und Kosten eingespart werden. Eine wirtschaftlichere Fertigung von stabilen und geräuscharmen Ventilen ist somit erfindungsgemäß realisiert.

Folglich ist die eingangs genannte Aufgabe gelöst.

Der Dichtkörper könnte als elastischer Kunststoffkörper ausgebildet sein. Ein solcher Dichtkörper ist zumindest teilweise deformierbar. Ein durch ein magnetisches Feld reversibel deformierbarer elastischer Kunststoffkörper kann durch das magnetische Feld aus einer Ruhelage verbracht werden, in welche der elastische Kunststoffkörper nach Abschalten des magnetischen Felds durch seine ihm innewohnende Rückstellneigung selbständig zurückkehrt. Hierdurch wird ein magnetoelastischer Effekt zum Öffnen oder Schließen eines Ventils genutzt.

Der Kunststoffkörper könnte zylindrisch ausgebildet sein. Durch diese konkrete Ausgestaltung kann der Kunststoffkörper einfach gefertigt werden. Er kann des Weiteren beispielsweise im Inneren einer Spule als Ganzes geführt und wie ein Pfropfen bewegt werden. Der Kunststoffkörper kann im Ventil als Hubanker fungieren.

Der Kunststoffkörper könnte vor diesem Hintergrund auch eine andere Geometrie aufweisen. Beispielsweise ist denkbar, dass der Kunststoffkörper kantig ausgebildet ist, damit ein Fluid an seinen ebenen Flächen problemlos vorbeiströmen kann. Konkret ist denkbar, dass der Kunststoffkörper als Quader oder als Prisma ausgebildet ist.

Denkbar ist auch, dass der Kunststoffkörper Einbuchtungen, Schlitze oder Durchbrechungen aufweist, um mit anderen Bauteilen des Ventils zusammenzuwirken oder in Eingriff zu kommen.

Der Kunststoffkörper könnte als flächige Lage ausgebildet sein, die an einem Ende eingespannt ist und mit ihrem freien Ende am Dichtsitz anlegbar ist. Durch diese konkrete Ausgestaltung kann der Kunststoffkörper quasi wie ein Biegestreifen einen Dichtsitz freigeben oder verschließen. Aufgrund eines Biegemoments kehrt der Kunststoffkörper nach Auslenkung aus seiner Ruhelage in diese zurück, wenn das magnetische Feld abgeschaltet wird. Die genannte Ausgestaltung erlaubt einen flachen Aufbau des Ventils. Der Kunststoffkörper kann im Ventil als Kippanker fungieren.

Der Kunststoffkörper könnte als flächige Lage ausgebildet sein, die an zwei Enden oder umfänglich eingespannt ist und mit einem frei bewegbaren Zentralbereich am Dichtsitz anlegbar ist. Ein solcher Kunststoffkörper kann quasi wie eine durch das magnetische Feld ausJenkbare Tellerfeder oder Membran mit ihrem Zentralbereich einen Dichtsitz freigeben oder verschließen. Durch das umfängliche oder beidseitige Einspannen des Kunststoffkörpers steht dieser nach dem Auslenken aus seiner Ruhelage unter einer sehr hohen Spannung und kann besonders schnell in seine Ruhelage zurückkehren. Die Taktfrequenz eines Ventils kann hierdurch erhöht werden. Auch diese Ausgestaltung erlaubt einen sehr flachen Aufbau des Ventils.

Im Kunststoffkörper könnten ferromagnetische Partikel verteilt sein. Durch diese konkrete Ausgestaltung kann der Kunststoffkörper durch ein magnetische Feld deformiert, bereichsweise oder in seiner Gesamtheit bewegt werden. Besonders bevorzugt könnten Eisenpartikel verwendet werden, da diese kostengünstig sind. Insbesondere ist denkbar, Carbonyleisenpartikel, Eisenoxydpartikel oder Reineisenpartikel zu verwenden.

Die ferromagnetischen Partikel könnten einen mittleren Durchmesser aufweisen, der im Bereich 0,1 µm bis 1 mm liegt. Partikel dieser Größe stören vorteilhafterweise nicht den Aufbau des Kunststoffkörpers. Besonders bevorzugt könnten Partikel mit einem mittleren Durchmesser von 1 bis 100 µm verwendet werden, da diese problemlos dispergiert werden können und im fertigen Kunststoffkörper besonders homogen verteilt sind. Es hat sich gezeigt, dass sich kleinere Partikel aufgrund ihrer sehr hohen spezifischen Oberfläche nur schwer einmischen lassen. Größere Partikel führen aufgrund ihres Absetzverhaltens zu inhomogenen Kunststoffkörpem. Der angegebene besonders bevorzugte Bereich optimiert das Einmischverhalten und die Homogenität des Kunststoffkörpers.

Die Partikel könnten zwischen 5 und 50 Volumenprozent des Kunststoffkörpers einnehmen. Dieser Bereich hat sich als besonders vorteilhaft erwiesen, einen hinreichend elastischen Kunststoffkörper zu schaffen, der zugleich ausreichend auf das magnetische Feld anspricht und sich durch das magnetische Feld deformieren und bewegen lässt.

Die Einrichtung zur Erzeugung eines magnetischen Feldes könnte eine Spule umfassen. Hierdurch wird eine Elektromagnet geschaffen, der eine rasche Taktung des Ventils ermöglicht.

Vor diesem Hintergrund könnte der Dichtkörper bei einer magnetischen Flussdichte von 0,5 bis 2 Tesla deformierbar oder bewegbar sein. Vorteilhaft lässt sich der Dichtkörper durch relativ geringe Ströme zumindest teilweise bewegen oder deformieren.

Es ist denkbar, den elastischen Kunststoffkörper aus Elastomeren zu fertigen. Vor diesem Hintergrund ist denkbar, dass thermoplastische Elastomere verwendet werden. Dabei kann es sich um weitmaschig chemisch oder physikalisch vernetzte Polymere handeln, die sich unter ihrem Glaspunkt stahlelastisch verwalten und die bei Temperaturen oberhalb ihres Glaspunktes gummielastisch sind. Glastemperaturen von bevorzugt eingesetzten Elastomeren liegen bei 20° C und darunter. Bevorzugt verhalten sich die eingesetzten Elastomere bis zu ihrer Schmelz- oder Zersetzungstemperatur gummielastisch.

Der elastische Kunststoffkörper könnte aus Ethylvinylacetat bestehen. Dieser Kunststoff ist kostengünstig und bis 140°C stabil. Der elastische Kunststoffkörper könnte aus NBR (Nitril-Butadien-Kautschuk) bestehen. Dieser Kunststoff ist kostengünstig verarbeitbar. Der elastische Kunststoffkörper könnte aus HNBR ( Hydrierter Nitril-Butadien-Kautschuk) bestehen. Dieser Kunststoff ist sogar bis 150°C stabil und halogenfrei. Der elastische Kunststoffkörper könnte aus FKM (Fluorkautschuk) bestehen. Dieser Kunststoff ist besonders chemisch stabil bei Kontakt mit Kraftstoffen. Der elastische Kunststoffkörper könnte aus Silikonelastomeren bestehen. Diese Kunststoffe sind auch bei Temperaturen unter 0°C weich und elastisch. Insbesondere könnten fluorierte Silikonelastomere verwendet werden. Diese sind kraftstoffbeständig.

Das hier beschriebene Ventil könnte mehrere Einlässe aufweisen. Diese Ausgestaltung eignet das Ventil zur Verwendung als Umschaltventil, bei dem zwei oder mehrere Einlässe wahlweise fluidleitend mit dem Auslass verbunden werden können.

Das hier beschriebene Ventil eignet sich besonders zur Verwendung als Regenerierventil in Kraftfahrzeugen, da es nahezu lautlos arbeitet und mit geringen Strömen mit einer hohen Frequenz getaktet werden kann.

Über die Tankentlüftung eines Kraftfahrzeugs können ab einer bestimmten Temperatur leichtflüchtige Kohlenwasserstoffe in die Atmosphäre gelangen. In der Euro-2-Norm ist diese Emission auf einen bestimmten Grenzwert gesetzt worden. Um diesen einzuhalten, wird ein Aktivkohlefilter in die Tankentlüftung eingebaut. Dieser absorbiert die entwichenen Kohlenwasserstoffe und lässt nur reine Luft in die Atmosphäre entweichen. Ein Regenerierventil wird zwischen dem Aktivkohlefilter und dem Ansaugrohr des Motors platziert. Das Ventil öffnet unter bestimmten Voraussetzungen und ermöglicht eine Regeneration des Aktivkohlefilters. Die Kraftstoffdämpfe werden über das Regenerierventil in das Ansaugrohr gesaugt, gelangen dann in den Verbrennungsraum der Zylinder und werden dort verbrannt.

Das hier beschriebene Ventil könnte in pneumatischen oder hydraulischen Bremsen Verwendung finden. Insbesondere kann das hier beschriebene Ventil in der Industriepneumatik, der Medizintechnik oder der Automatisierungstechnik Verwendung finden.

Es gibt nun verschiedene Möglichkeiten, die Lehre der vorliegenden Erfindung auf vorteilhafte Weise auszugestalten und weiterzubilden. Dazu ist einerseits auf die nachgeordneten Ansprüche, andererseits auf die nachfolgende Erläuterung bevorzugter Ausführungsbeispiele der Erfindung anhand der Zeichnung zu verweisen.

In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine schematische Schnittansicht eines Ventils des Stands der Technik mit einem Dichtkörper, der ein Metallteil aufweist, an welchem ein Elastomer anvulkanisiert ist,
- Fig. 2: eine schematische Schnittansicht eines Ventils, welches analog zum Ventil der Fig. 1 aufgebaut ist, wobei der Dichtkörper als Kunststoffkörper ausgebildet ist,
- Fig. 3: eine schematische Schnittansicht eines Ventils des Stands der Technik mit einem zylindrischen Dichtkörper, der ein Metallteil aufweist, an welchem ein Elastomer anvulkanisiert ist,
- Fig. 4: eine schematische Schnittansicht eines Ventils, welches analog zum Ventil der Fig. 3 aufgebaut ist, wobei der Dichtkörper als runder, zylindrischer Kunststoffkörper ausgebildet ist,
- Fig. 5: eine schematische Schnittansicht eines Ventils des Stands der Technik mit einem Dichtkörper, der als biegbares Metallteil ausgebildet ist, an welchem ein Elastomer anvulkanisiert ist,
- Fig. 6: eine schematische Schnittansicht eines Ventils, welches analog zum Ventil der Fig. 5 aufgebaut ist, wobei der Dichtkörper als biegbarer Kunststoffkörper ausgebildet ist,
- Fig. 7: eine schematische Schnittansicht eines Ventils des Stands der Technik mit einem umfänglich eingespannten Dichtkörper, der ein Metallteil aufweist, an welchem ein Elastomer anvulkanisiert ist, und
- Fig. 8: eine schematische Schnittansicht eines Ventils, welches analog zum Ventil der Fig. 7 aufgebaut ist, wobei der Dichtkörper als umfänglich eingespannter flächiger Kunststoffkörper ausgebildet ist.

### Ausführung der Erfindung

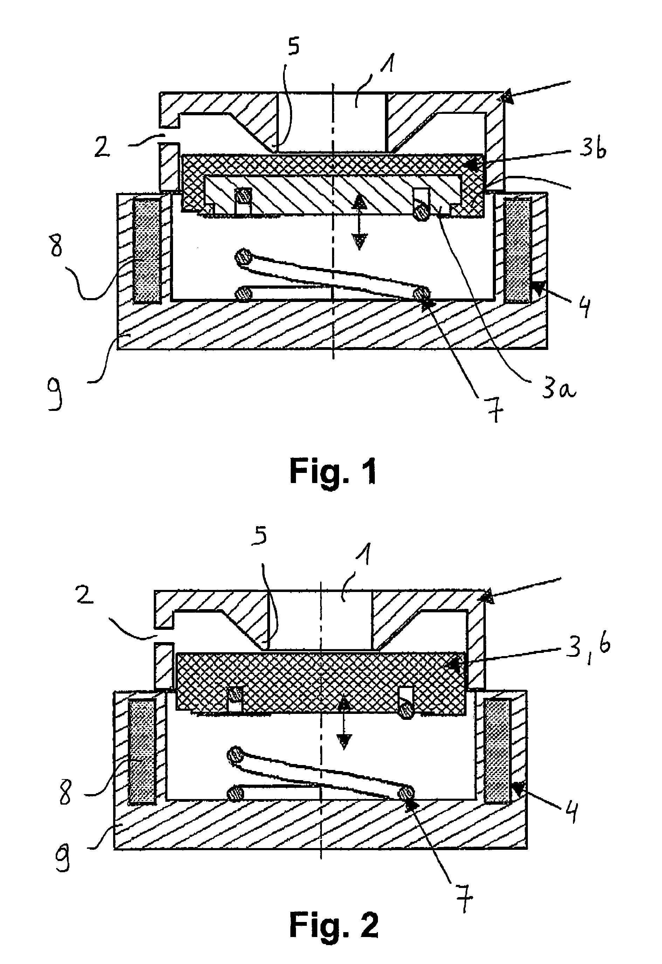

Fig. 1 zeigt eine schematische Schnittansicht eines Ventils des Stands der Technik. Fig. 1 zeigt ein Ventil mit einem Einlass 2, einem Auslass 1, einem Dichtkörper 3 und einer Einrichtung 4 zur Erzeugung eines magnetischen Feldes, wobei der Dichtkörper durch die Einrichtung 4 zumindest teilweise beweglich ist, und wobei der Dichtkörper den Einlass 2 und den Auslass 1 fluidleitend verbindet, indem er zumindest teilweise von einem Dichtsitz 5 abhebt. Der Dichtkörper umfasst ein Metallteil 3a, an welchem ein Elastomer 3b anvulkanisiert ist. Der Dichtkörper wird durch eine Feder 7 gegen den Dichtsitz 5 gepresst. Durch das von der Einrichtung 4 erzeugte magnetische Feld wird das Metallteil 3a derart entgegen der Federkraft gezogen, dass der Dichtkörper den Dichtsitz 5 freigibt und Einlass 2 und Auslass 1 fluidleitend verbindet.

Fig. 2 zeigt ein Ventil mit einem Einlass 2, einem Auslass 1, einem Dichtkörper 3 und einer Einrichtung 4 zur Erzeugung eines magnetischen Feldes, wobei der Dichtkörper 3 durch die Einrichtung 4 zumindest teilweise beweglich ist, und wobei der Dichtkörper 3 den Einlass 2 und den Auslass 1 fluidleitend verbindet, indem er zumindest teilweise von einem Dichtsitz 5 abhebt. Der Dichtkörper 3 ist als massiver Kunststoffkörper 6 ausgebildet, der direkt mit dem magnetischen Feld der Einrichtung 4 wechselwirken kann. Durch das von der Einrichtung 4 erzeugte magnetische Feld wird der Kunststoffkörper 6 derart entgegen der Federkraft der Feder 7 gezogen, dass der Dichtkörper 3 den Dichtsitz 5 freigibt und Einlass 2 und Auslass 1 fluidleitend verbindet. Der Dichtkörper 3 ist als elastischer Kunststoffkörper 6 ausgebildet.

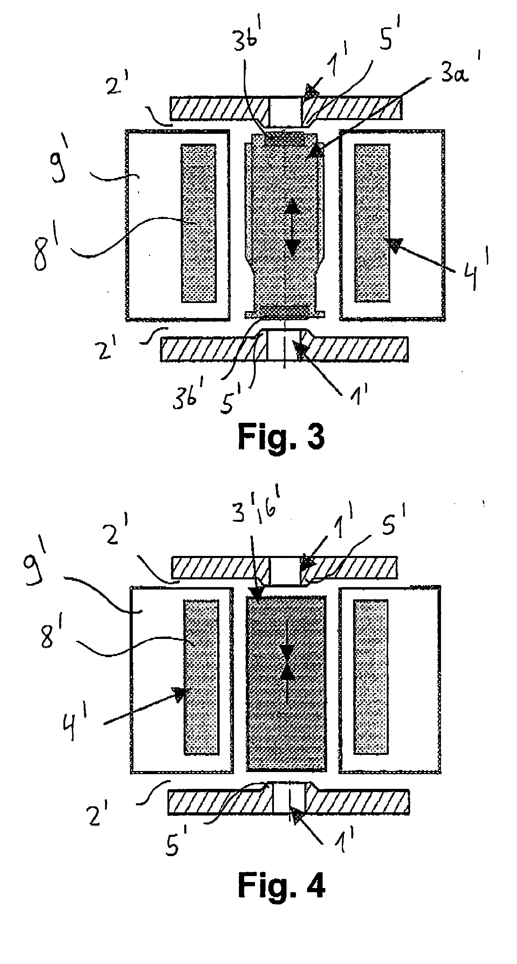

Fig. 3 zeigt eine schematische Schnittansicht eines Ventils des Stands der Technik mit einem zylindrischen Dichtkörper, der ein Metallteil 3a' aufweist, an welchem Elastomere 3b' anwlkanisiert sind. Das Ventil weist Einlässe 2', Auslässe 1', einen Dichtkörper und eine Einrichtung 4' zur Erzeugung eines magnetischen Feldes auf, wobei der Dichtkörper durch die Einrichtung 4' beweglich ist, und wobei der Dichtkörper jeweils einen Einlass 2' und einen Auslass 1' fluidleitend verbindet, indem er von einem Dichtsitz 5' abhebt.

Durch das von der Einrichtung 4' erzeugte magnetische Feld wird das Metallteil 3a' als Ganzes derart bewegt, dass der Dichtkörper 3 die Dichtsitze 5' freigibt und Einlässe 2' und Auslässe 1' jeweils fluidieitend miteinander verbindet.

Fig. 4 zeigt ein Ventil, welches Einlässe 2', Auslässe 1', einen Dichtkörper 3' und eine Einrichtung 4' zur Erzeugung eines magnetischen Feldes aufweist. Der Dichtkörper 3' ist durch die Einrichtung 4' beweglich, wobei der Dichtkörper 3' jeweils einen Einlass 2' und einen Auslass 1' fluidleitend verbindet, indem er von jeweils einem Dichtsitz 5' abhebt.

Der Dichtkörper 3' ist als massiver zylindrischer Kunststoffkörper 6' ausgebildet, der direkt mit dem magnetischen Feld der Einrichtung 4' wechselwirken kann.

Durch das von der Einrichtung 4' erzeugte magnetische Feld wird der Kunststoffkörper 6' derart in seiner Gesamtheit innerhalb der Einrichtung 4' bewegt, dass der Dichtkörper 3' jeweils einen Dichtsitz 5' freigibt und einen Einlass 2' und Auslass 1' fluidleitend verbindet. Der Dichtkörper 3' ist als elastischer Kunststoffkörper 6' ausgebildet.

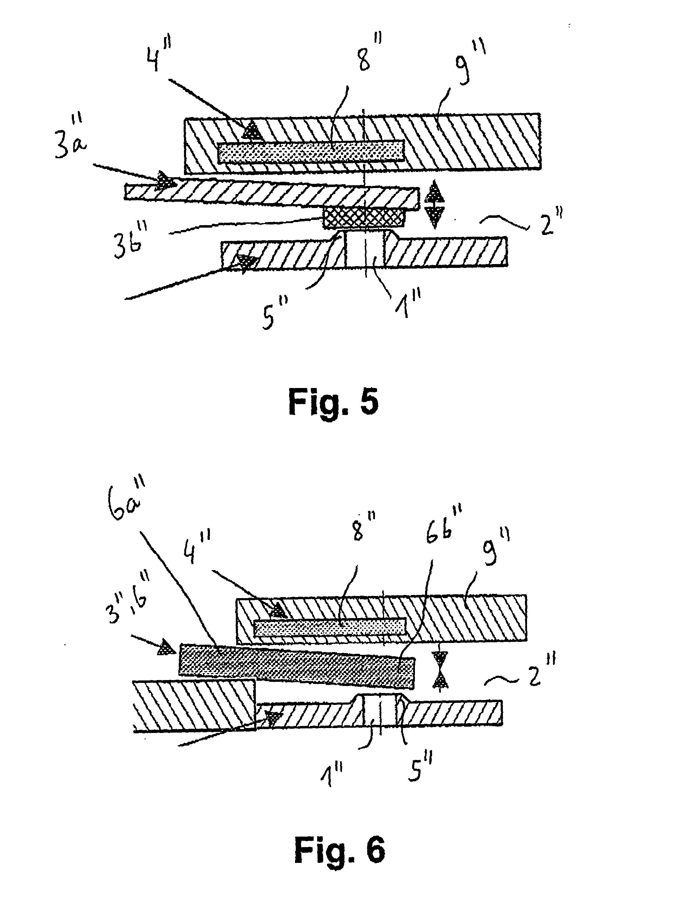

Fig. 5 zeigt ein Ventil des Stands der Technik mit einem Dichtkörper, der als biegbares Metallteil 3a" ausgebildet ist, an welchem ein Elastomer 3b" anvulkanisiert ist. Das Elastomer 3b" liegt auf dem Dichtsitz 5" auf und dichtet diesen ab.

Der Dichtkörper kann den Dichtsitz 5" unter Formveränderung des biegbaren Metallteils 3a" freigeben und dadurch den Einlass 2" mit dem Auslass 1" fluidleitend verbinden. Bei der Formveränderung wird das Metallteil 3a" verbogen. Das dem Dichtsitz 5" zugewandte Ende des Metallteils 3a" verbindet durch das Verbiegen den Einlass 2" mit dem Auslass 1" fluidleitend.

Das Metallteil 3a" wird durch das magnetische Feld der Einrichtung 4" verbogen, um den Einlass 2" mit dem Auslass 1" fluidleitend zu verbinden. Nach Abschalten des magnetischen Felds stellt sich das Metallteil 3a" in seine Ruhelage zurück und verschließt den Dichtsitz 5".

Fig. 6 zeigt ein Ventil mit einem Dichtkörper 3", der als elastischer Kunststoffkörper 6" ausgebildet ist. Der Kunststoffkörper 6" ist als flächige Lage ausgebildet, die an einem Ende 6a" eingespannt ist und mit ihrem freien Ende 6b" am Dichtsitz 5" unmittelbar dichtend anlegbar ist.

Der Dichtkörper 3" kann den Dichtsitz 5" unter Formveränderung des Kunststoffkörpers 6" freigeben und dadurch den Einlass 2" mit dem Auslass 1" fluidleitend verbinden. Bei der Formveränderung wird der Kunststoffkörper 6" reversibel verbogen. Das dem Dichtsitz 5" zugewandte Ende 6b" verbindet durch das Verbiegen den Einlass 2" mit dem Auslass 1" fluidleitend.

Der Kunststoffkörper 6" wird durch das magnetische Feld der Einrichtung 4" verbogen, um den Einlass 2" mit dem Auslass 1" fluidleitend zu verbinden. Nach Abschalten des magnetischen Felds stellt sich der Kunststoffkörper 6" in seine Ruhelage zurück und verschließt den Dichtsitz 5".

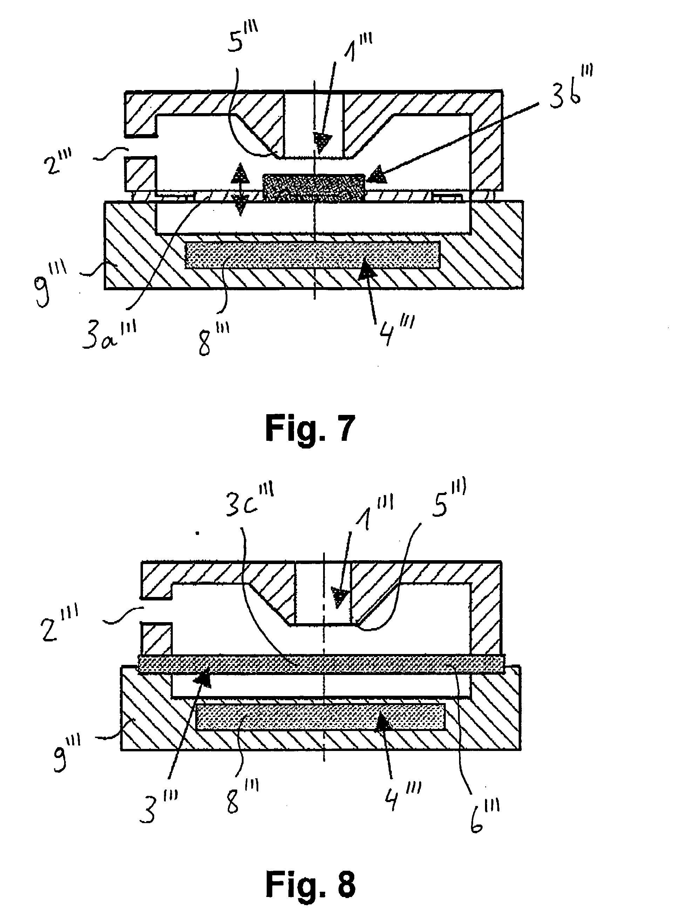

Fig. 7 zeigt ein Ventil des Stands der Technik mit einem umfänglich eingespannten Dichtkörper, der ein Metallteil 3a"' aufweist, an welchem ein Elastomer 3b''' anvulkansiert ist. Der Dichtkörper ist tellerfederartig eingespannt. Das Metallteil 3a''' ist scheibenförmig ausgebildet und an seinem Rand eingespannt, wobei im Mittelpunkt des Metallteils 3a''' ein Elastomer 3b''' anvulkanisiert ist.

Durch die Einrichtung 4''' wird ein magnetisches Feld erzeugt, welches das Metallteil 3a''' in Richtung der Einrichtung 4''' zieht. Hierdurch hebt das Elastomer 3b''' vom Dichtsitz 5''' ab, so dass der Auslass 1''' mit dem Einlass 2''' filuidleitend verbunden wird.

Fig. 8 zeigt ein Ventil mit einem umfänglich eingespannten Dichtkörper 3''', der als massiver Kunststoffkörper 6''' ausgebildet ist. Der Dichtkörper 3''' ist tellerfederartig eingespannt. Der Kunststoffkörper 6''' ist scheibenförmig ausgebildet und kann mit seinem Zentralbereich 3c''' am Dichtsitz 5''' anliegen. Der Kunststoffkörper 6''' ist als flächige Lage ausgebildet ist, die umfänglich eingespannt ist und mit einem frei bewegbaren Zentralbereich 3c''' am Dichtsitz 5''' anlegbar ist.

Durch die Einrichtung 4''' wird ein magnetisches Feld erzeugt, welches den Kunststoffkörper 6''' in Richtung der Einrichtung 4''' zieht. Hierdurch hebt der Zentralbereich 3c''' vom Dichtsitz 5''' ab, so dass der Auslass 1''' mit dem Einlass 2"' fluidleitend verbunden wird.

Um Wiederholungen zu vermeiden sei mit Bezug auf die Fig. 2, 4, 6 und 8 das Folgende ausgeführt:

Im elastischen Kunststoffkörper 6, 6', 6", 6''' sind ferromagnetische Partikel, nämlich Eisenpartikel verteilt. Die ferromagnetischen Partikel weisen einen mittleren Durchmesser auf, der im Bereich 0,1 µm bis 1 mm liegt. Die Partikel nehmen zwischen 5 und 50 Volumenprozent des Kunststoffkörpers 6, 6', 6", 6''' ein. Durch die ferromagnetischen Partikel kann der Kunststoffkörper 6, 6', 6", 6''' mit einem magnetischen Feld in Wechselwirkung treten und deformiert werden.

Die Einrichtung 4, 4", 4"', 4''' zur Erzeugung eines magnetischen Feldes umfasst eine Spule 8, 8', 8", 8'''. Die Spule 8, 8', 8", 8"' ist von einem Rückschluss 9, 9', 9", 9''' umgeben, welcher die magnetischen Feldlinien führt. Der Dichtkörper 3, 3', 3", 3''' ist bei einer magnetischen Flussdichte von 0,5 bis 2 Tesla bewegbar oder deformierbar.

Hinsichtlich weiterer vorteilhafter Ausgestaltungen und Weiterbildungen der erfindungsgemäßen Lehre wird einerseits auf den allgemeinen Teil der Beschreibung und andererseits auf die Patentansprüche verwiesen.

Abschließend sei ganz besonders hervorgehoben, dass die zuvor ausgewählten Ausführungsbeispiele lediglich zur Erörterung der erfindungsgemäßen Lehre dienen, diese jedoch nicht auf diese Ausführungsbeispiele einschränken.

## Patentansprüche

1. Ventil mit einem Einlass (2, 2',2'',2'''), einem Auslass (1, 1', 1'', 1'''), einem Dichtkörper (3, 3', 3'', 3''') und einer Einrichtung (4, 4', 4'', 4''') zur Erzeugung eines magnetischen Feldes, wobei der Dichtkörper (3, 3', 3'', 3''') durch die Einrichtung (4, 4', 4'', 4''') zumindest teilweise beweglich ist, wobei der Dichtkörper (3, 3', 3'', 3''') den Einlass (2, 2',2'',2''') und den Auslass (1, 1', 1'', 1 ''') fluidleitend verbindet, indem er zumindest teilweise von einem Dichtsitz (5, 5', 5'', 5''') abhebt, und wobei der Dichtkörper (3, 3', 3'', 3''') aus einem Kunststoffkörper (6, 6', 6'', 6''') gefertigt ist, der durch das magnetische Feld zumindest bereichsweise bewegbar ist,
**dadurch gekennzeichnet, dass** der Dichtkörper (3, 3', 3'', 3''') als massiver Kunststoffkörper (6, 6', 6'', 6''') ausgebildet ist.

2. Ventil nach Anspruch 1, **dadurch gekennzeichnet, dass** der Dichtkörper (3, 3', 3'', 3''') als elastischer Kunststoffkörper (6, 6', 6'', 6''') ausgebildet ist.

3. Ventil nach Anspruch 1 oder 2, **dadurch gekennzeichnet, dass** der Kunststoffkörper (6, 6', 6'', 6''') zylindrisch ausgebildet ist.

4. Ventil nach einem der Ansprüche 1 bis 3, **dadurch gekennzeichnet, dass** der Kunststoffkörper (6") als flächige Lage ausgebildet ist, die an einem Ende (6a") eingespannt ist und mit ihrem freien Ende (6b") am Dichtsitz (5") anlegbar ist.

5. Ventil nach einem der Ansprüche 1 bis 3, **dadurch gekennzeichnet, dass** der Kunststoffkörper (6''') als flächige Lage ausgebildet ist, die an zwei Enden oder umfänglich eingespannt ist und mit einem frei bewegbaren Zentralbereich (3c''') am Dichtsitz (5''') anlegbar ist.

6. Ventil nach einem der Ansprüche 1 bis 5, **dadurch gekennzeichnet, dass** im Kunststoffkörper (6, 6', 6'', 6''') ferromagnetische Partikel verteilt sind.

7. Ventil nach Anspruch 6, **dadurch gekennzeichnet, dass** die ferromagnetischen Partikel einen mittleren Durchmesser aufweisen, der im Bereich 0,1 µm bis 1 mm liegt.

8. Ventil nach Anspruch 6 oder 7, **dadurch gekennzeichnet, dass** die Partikel zwischen 5 und 50 Volumenprozent des elastischen Kunststoffkörpers (6, 6', 6", 6''') einnehmen.

9. Ventil nach einem der Ansprüche 1 bis 8, **dadurch gekennzeichnet, dass** die Einrichtung (4, 4', 4'', 4''') zur Erzeugung eines magnetischen Feldes eine Spule (8, 8', 8", 8''') umfasst.

10. Ventil nach einem der Ansprüche 1 bis 9, **dadurch gekennzeichnet, dass** der Dichtkörper (3, 3', 3", 3''') bei einer magnetischen Flussdichte von 0,5 bis 2 Tesla zumindest bereichsweise bewegbar oder deformierbar ist.
